# EUROPEAN PATENT SPECIFICATION

(11) **EP 4 369 298 B1**
(45) Date of publication and mention of the grant of the patent: **13.05.2026**
(21) Application number: 23194412.5
(22) Date of filing: 31.08.2023
(51) Int. Cl.: G06T 7/70

(54) **HDR-BASED AUGMENTATION FOR CONTRASTIVE SELF-SUPERVISED LEARNING**
HDR-BASIERTE VERSTÄRKUNG FÜR KONTRASTALES SELBSTÜBERWACHTES LERNEN
AUGMENTATION BASÉE SUR HDR POUR APPRENTISSAGE AUTO-SUPERVISÉ PAR CONTRASTE

(30) Priority: 11.11.2022 US 202218054686
(43) Date of publication of application: 15.05.2024
(73) Proprietor: SAP SE, 69190 Walldorf (DE)
(72) Inventor: KLEIN, Tassilo, 69190 Walldorf (DE); NABI, Moin, 69190 Walldorf (DE)
(74) Representative: Müller-Boré & Partner Patentanwälte PartG mbB

(56) References cited:
- US-A1- 2021 286 997
- CHENG TING ET AL: "A Simple Framework for Contrastive Learning of Visual Representations", GITHUB PAGE FOR THE CORRESPONDING PAPER IN ICML2020, 9 November 2021 (2021-11-09), XP093120822, Retrieved from the Internet <URL:https://web.archive.org/web/20211109042141/https://simclr.github.io/> [retrieved on 20240117]
- CHEN TING ET AL: "A Simple Framework for Contrastive Learning of Visual Representations", 1 July 2020 (2020-07-01), 2020 ICML, Vienna, pages 1 - 20, XP093037179, Retrieved from the Internet <URL:https://arxiv.org/pdf/2002.05709.pdf> [retrieved on 20230404], DOI: 10.48550/arXiv.2002.05709

## Description

### FIELD

The present disclosure generally relates to machine learning.

### BACKGROUND

Deep learning machine learning (ML) models may require human supervision during the training of the ML model. The robustness ML model may depend on various aspects such as types of images, quantity of images, and variability of the images in the training, and the like. As such, an image training set lacking in these aspects may deteriorate the performance of the ML model. For example, a ML learning model (which is used to detect or recognized objects in an image) may be training with a "poor" image training set, in which case the ML model may have poor performance such as in scenarios with fine-grained boundaries between object categories.
Document Cheng Ting et al: "A Simple Framework for Contrastive Learning of Visual Representations", Github Page for the corresponding paper in ICML2020, 9 November 2021 (2021-11-09), XP093120822, discloses a framework for contrastive learning of visual representations, wherein contrastive self-supervised learning algorithms are simplified without requiring specialized architectures or a memory bank.
Document Cheng Ting et al: "A Simple Framework for Contrastive Learning of Visual Representations", 1 July 2020 (2020-07-01), pages 1-20, XP093037179, DOI: 10.48550/arXiv.2002.05709, discloses a similar framework for contrastive learning of visual representations.
Document US 2021/0286997 A1 relates to detecting objects from high resolution image. Part images are generated based on a preceding object detection result and object tracking result with respect to a high-resolution image and augmented images are generated by applying data augmentation to the part images. Based on artificial intelligence (AI), an object can thus be detected and tracked by using the generated augmented images, and re-inference can be performed based on the detection and tracking result.

### SUMMARY

Methods, systems, and articles of manufacture, including computer program products, are provided for high dynamic range (HDR) augmentation.

According to an aspect, a system includes at least one data processor and at least one memory storing instructions which, when executed by the at least one data processor, result in operations including: receiving a first image and a second image as inputs for contrastive self-supervised learning; applying a high dynamic range augmentation to the first image to generate a first pair of views; applying the high dynamic range augmentation to the second image to generate a second pair of views; applying a first convolutional neural network to the first pair of views to output a first pair of encoded representations; applying a second convolutional neural network to the second pair of views to output a second pair of encoded representations; projecting the first pair of encoded representations to form first projected representations; projecting the second pair of encoded representations to form second projected representations; and training a machine learning model using the high dynamic range augmentations and an objective function that provides contrastive self-supervised learning.

In some variations, one or more of the features disclosed herein including the following features can optionally be included in any feasible combination. The first image and the second image may each be selected from an image library of unlabeled images. The first image and the second images may be dissimilar images that depict different content. The high dynamic range augmentation may be used to generate the first pair of views comprises a synthetic high dynamic range generation of the first pair of views. The high dynamic range augmentation may be used to generate the second pair of views comprises the synthetic high dynamic range generation of the second pair of views. The high dynamic range augmentation may be selected from a group of augmentations available for use to augment the first image and the second image. A first encoder may project the first pair of encoded representations to form the first projected representations. A second encoder may project the second pair of encoded representations to form the second projected representations. A first neural network may include a first multi-layer perceptron projects the first pair of encoded representations to form the first projected representations. A second neural network may include a second multi-layer perceptron projects the second pair of encoded representations to form the second projected representations. The trained machine learning model may be deployed to perform an image classification task during an inference phase of the machine learning model.

It is to be understood that both the foregoing general description and the following detailed description are exemplary and explanatory only and are not restrictive. Further features and/or variations may be provided in addition to those set forth herein. For example, the implementations described herein may be directed to various combinations and subcombinations of the disclosed features and/or combinations and subcombinations of several further features disclosed below in the detailed description.

### DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 depicts an example of unlabeled and labeled datasets in a self-supervised learning system, in accordance with some embodiments;
FIG. 2 depicts an example of a contrastive self-supervised learning system including HDR data augmentation, in accordance with some embodiments;
FIG. 3 depicts examples of HDR data augmentations, in accordance with some embodiments;
FIG. 4 depicts an example of a process for HDR-based augmentation for contrastive self-supervised learning, in accordance with some embodiments; and
FIG. 5 depicts a block diagram illustrating a computing system consistent with implementations of the current subject matter.

Like labels are used to refer to same or similar items in the drawings.

### DETAILED DESCRIPTION

As deep learning machine learning (ML) models can require robust training, unsupervised learning may provide a way to increase the amount of training data as well as reduce the issues with using supervised learning datasets for training. To address some of the noted shortcomings of training, self-supervised learning (SSL) may be used. SSL may facilitate bridging the information gap by exploiting the intrinsic structure of the data as a supervision signal for the ML model. Self-supervised learning refers to the use of supervisory signals taken from the underlying data (e.g., predict any unobserved portion of the input from any observed or unhidden portion of the input). Some contrastive learning methods can match or surpass the performance of supervised methods. Contrastive learning (also referred to herein as contrastive self-supervised learning) refers to a form of self-supervised learning using augmentations of the same input to provide additional similar representations. In any case, designing and implementing such contrastive learning methods may be complicated due in part to the arbitrary choice of selection in these methods when it comes to the data augmentation. To alleviate this problem and perhaps other problems, there is disclosed the use of High Dynamic Range (HDR) image generation as the data augmentation for use in contrastive self-supervised learning.

HDR refers to taking an image of an object using multi-exposures to provide a higher dynamic when compared to using just a single exposure. For example, an image capture device, such as a camera, may capture images of a scene (which may include one or more objects) using different exposure settings (e.g., using exposure bracketing such that a given exposure is used for one image, one or more brighter exposures for other images, and one or more darker exposures for other images). The images of the scene are then combined into a single HDR image. The HDR image may be captured by a device, such as a camera, that captures the series of images at different f-stops for example and combines the series to form a single HDR image. Alternatively, a single image (e.g., a stock image of a product, object, person, animal, etc., or other type of image) can be used to "virtually" (or "synthetically") form the HDR image using image processing. For example, a single image can be decomposed into its components (e.g., illumination and reflectance) using a filter (e.g., a smoothing filter, edge-preserving smoothing filter, or other type of filter); the decomposed reflectance component is increased to improve details in bright areas of the image, while the illumination component is increased and decreased to generate a set of illumination images. This set of illumination images may correspond to images having different camera exposures, which can be combined to form an enhanced illumination that is then combined with the reflectance image to form a single "virtual" HDR image. Although there are a variety of techniques to generate HDR images, an example of generating an HDR image from a single image is described in "Generation of high dynamic range illumination from a single image for the enhancement of undesirably illuminated images," Jae Sung Park, Jae Woong Soh, and Nam Ik Cho, Multimedia Tools and Applications, 78(14):20263-20283, 2019.

In the case of deep neural networks that are trained with large, annotated datasets, the deep neural networks may provide accurate results in the context of computer vision. As noted however, the use of supervised machine learning approaches with respect to training of the deep neural networks can require annotation of large quantities of training samples (e.g., example images). In the case of supervised learning, the annotation (e.g., labeling of the large, datasets for training) is extremely burdensome, non-trivial, expensive, time-consuming, and/or may be a source for privacy leakages. As such, the use of unsupervised learning can mitigate one or more of these concerns by training ML models (e.g., deep neural networks) using unlabeled datasets, and, in particular, the use of unsupervised visual representation learning in the form of contrastive self-supervised learning is disclosed herein.

As noted, self-supervised learning (SSL) provides an alternative to supervised learning. In self-supervised learning, the supervisory signals are derived from the data itself by an unsupervised learning proxy task (also referred to as a pretext task). The ML models (which are training using self-supervision) may facilitate data-efficient "supervised" fine-tuning on a target downstream task, hence reducing the burden of manual annotation self-supervised learning methods construct a representation (embedding) space by creating a supervised proxy task from the data itself. For example, the representation obtained from the self-supervised ML model(s) training may be used for fine tuning on a later, downstream ML task.

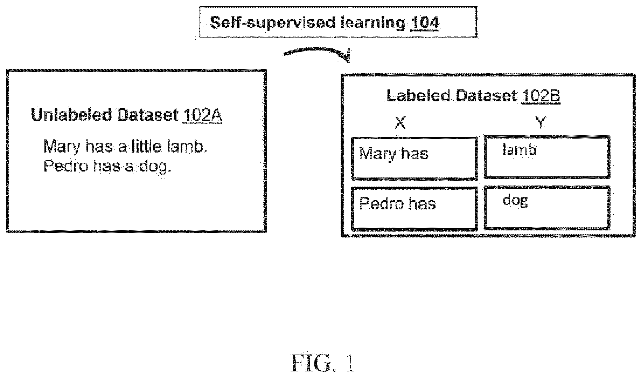

To illustrate further with examples, self-supervised learning (SSL) may be used on text-based data using a proxy (or pretext task). FIG. 1 shows an example of an unlabeled data set 102A. In this example, SSL 104 uses a proxy task to generate a labeled dataset 102B from the data 102A itself. In the case of images for SSL, the pretext tasks may take various forms, such as relative patch prediction (Doersch et al., 2015), solving jigsaw puzzles (Noroozi and Favaro, 2016), colorization (Zhang et al., 2016), and rotation prediction (Gidaris et al., 2018). Although good results can be obtained with bigger networks and longer training, these pretext tasks can rely on somewhat ad-hoc heuristics, which limits the generality of learned representations.

In the case of SSL in the form of contrastive learning, contrastive SSL can learn discriminative features. Contrastive learning forces the ML model (e.g., neural network, deep neural network, and/or the like) to learn feature representations by pushing apart different samples (negatives) or pulling closer similar ones (positives). The notion of similar and dissimilar samples varies according to the task. For example, an image and a simple data augmentation (e.g., a transformation) of the image can be considered positives or negatives can be generated using an encoder, a momentum encoder, and/or the like.

In contrastive SSL, two views of each sample image may be generated and then a loss (or objective) function is enforced across these two views during the iterations during ML model learning. These two views used for the contrastive SSL may be generated using data augmentation; the loss function may take a variety of forms such as contrastive loss, triplet loss, Lifted Structured Loss, InfoNCE, noise contrastive estimation, multi-class n-pair loss, and soft-nearest neighbors loss. In other words, contrastive SSL is a ML training technique that enhances the performance of ML model including computer vision tasks by contrasting samples against each other to learn attributes that are common between data classes and attributes that set apart a data class from another.

However, contrastive SSL may not be robust to the choice of data augmentations. To generate the different views of a single image, data augmentation may generate these views by a variety of techniques including color jittering, image rotation, image flipping, image noising, and random affine. Reliance on the difficulty of the negative pairs of contrastive SSL may be a reason for the noted robustness issues caused by the choice of data augmentations. As a way of learning a feature representation, a data augmentation policy may prevent the ML model from exploiting naive cues to match the samples. However, inductive bias can be introduced through the selection of different augmentations, along with their hyper-parameters defining the strength of each augmentation. The ad-hoc nature of such a strategy can negatively affect the learned representations in terms of generalizability and transferability as not all data augmentations are good for all types of samples. In this regard, adding an extra data augmentation is complicated as the new data augmentation operation may be helpful to certain concepts while harmful to others. Moreover, the hyper-parameters (which control the strength of data augmentations) may need to be tuned for each augmentation. To address one or more of the above-noted problems, for a contrastive SSL of a ML model, there may be provided a data augmentation approach that uses High Dynamic Range (HDR) image generation.

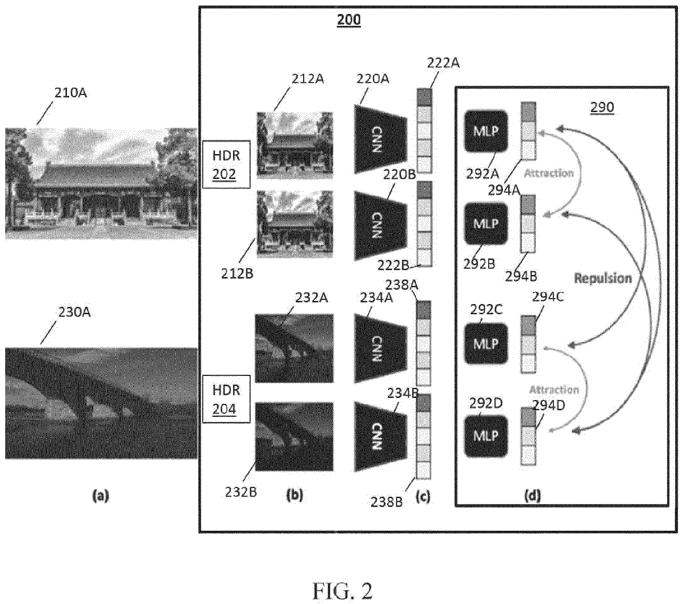

FIG. 2 depicts an example of an ML model 200 using HDR for data augmentation for the contrastive learning of the ML model, in accordance with some example embodiments. As noted, HDR may be used to increase the dynamic range of a single low dynamic range image. The HDR image may be generated using multiple image captures (e.g., using f-stop bracketing with different exposures) or be generated "virtually" or "synthetically" from a single image as noted above.

In contrastive SSL (or contrastive learning, for short), a ML model training phase may select a pair of input images 210A-B. These input images may be selected such that they are different. Alternatively, or additionally, the input images may be selected from a data set of images. As contrastive learning is unsupervised, the input images are not annotated or labeled to indicate objects in the images such as the pagoda at 210A (or other objects in the image 210A) or the bridge at 230A (or other objects in the image).

In the example of FIG. 2, the first input image 210A is augmented using HDR 202 to form HDR image 212A and HDR image 212B. Alternatively, or additionally, HDR image 212A may correspond to a high dynamic range image, while HDR image 212B may just be the original image 210A (i.e., without the HDR image augmentation). And, the second input image 230A is augmented using HDR 204 to form HDR image 232A and HDR image 232B. In contrastive learning, the two similar pairs of images 212A are used to drive features of the ML models 292A-B closer, while the dissimilar pair 232A-B is used to drive the features further apart.

The convolutional neural networks (CNN) 220A-B each receives a respective one of the HDR images 212A-B. For example, the convolutional neural network 220A receives, as an input, HDR image 212A and outputs at 222A a representation of the input HDR image 212A. Likewise, the convolutional neural network 220B receives, as an input, HDR image 212B and outputs at 222B a representation of the input HDR image 212B. Similarly, the convolutional neural networks 234A-B receives a respective one of the HDR images 232A-B. In this example, the convolutional neural network 234A receives as the input HDR image 232A and outputs at 238A a representation of the input HDR image 232A, and the convolutional neural network 234B receives as an input HDR image 232B and outputs at 238B a representation of the input HDR image 232B.

Although FIG. 2 depicts the use of CNNs 220A-B and 234A-B, other types of machine learning technology and/or encoders may be used as well such that an input image is received as an input and an encoded representation is output.

At this stage, there is a first pair of "similar" image representations 222A-B and a second pair of "similar" image representations 238A-B (and each pair is dissimilar to the other pair). At 290, a projection head 292A projects the image representation 222A into another representation 294A. And, a projection head 292B projects the representation 222B into another representation 294B. The projection heads may be implemented as a non-linear function, such as multilayer perceptions (MLP) 292A-D. For example, the projection head 292A may be implemented as an ML model, such as a neural network (e.g., a dense input fully connected input layer configured to receive the image representation 222A, at least one Relu layer as a hidden layer, and a dense output layer outputting the output representation 294A). Projection heads 292B-D may be implemented in a similar way.

The representations 294A-B (also referred to as embedding vectors) are similar as the representations are generated from images 212A-B corresponding to the same image 210A. As such, a loss (or objective) function may be used to maximize the similarity ("attraction") as part of learning of the ML models 292A-B (e.g., the weights are adjusted so that the output representations 294A-B are closer). Meanwhile, a projection head 292C projects the representation 238A into another representation 294C, and a projection head 292D projects the representation 238B into another representation 294D. Here again, the representations 294C-D are similar, so a loss function minimizes the difference as part of learning of the ML models 292C-D.

The loss (or objective) function may also be used to maximize the difference between ("repulse") the dissimilar pairs of images. For example, the image representation 294A is dissimilar to image representation 294C, so the loss/objective function is used to maximize the difference between these pairs (e.g., the weights are adjusted so that the output representations 294A-B are farther part). Likewise, the image representation 294A is dissimilar to image representation 294D, so the loss/objective function is used to maximize the difference between these pairs. Furthermore, the image representation 294B is dissimilar to image representation 294C, so the loss/objective function is used to maximize the difference between these pairs, and the image representation 294B is dissimilar to image representation 294D, so the loss/objective function is used to maximize the difference between these pairs.

At 290, the learning based on HDR images provides contrastive learning which trains the ML models (e.g., neural networks) 292A-D to for example detect objects in an image scene. When compared to approaches not using contrastive learning using HDR image, the ML model (labeled MLP) 292A (when trained using contrastive learning including HDR images) will be able to detect objects such as the "pagoda" of 210A accurately and robustly as the ML model is trained with varied training images of pagodas (via the HDR images 212A-B provided as part of contrastive learning) and with contrasting images 232A-B (e.g., the HDR images of the bridges). Likewise, the ML model (labeled MLP) 292C (when trained using contrastive learning including HDR images) will be able to detect objects such as the "bridges" of 230A more accurately and robustly, when compared to approaches not using contrastive learning including HDR images. When training is complete, the ML models 200 (e.g., CNNs, MLPs, etc.) may be used for detection and classification during an inference phase. The training may be considered complete in response to a threshold level of iterations and/or a threshold error (or accuracy) measurement of the ML models.

To provide the contrastive SSL, an engine such as SimCLR may be extended to use HDR images (see, e.g., "A Simple Framework for Contrastive Learning of Visual Representations," ICML'2020 Chen et al., July 1, 2020). In the case of SimCLR, it can be used to learn representations by maximizing agreement between differently augmented views of the same data example via a contrastive loss in the latent space. SimCLR may be extended to an HDR data augmentation rather than a stochastic data augmentation as described by Chen et al.. Given a batch of input images, the HDR versions of the batch are generated by creating two views: the first view (e.g., 212A) is the original image itself 210A, while the second view 212B is the HDR version of that image 210A. Each view 212A-B is provided as an input to the CNNs (e.g., CNNs 220A-B and 234A-B), which provides the representations that are provided as inputs to the projection heads (e.g., MLPs 292A-D). A loss function (also referred to herein as an objective function or a contrastive objective function) is applied to image representations 294A-D to provide the combination of attraction between the two views of each image and repulsion across different images in the batch.

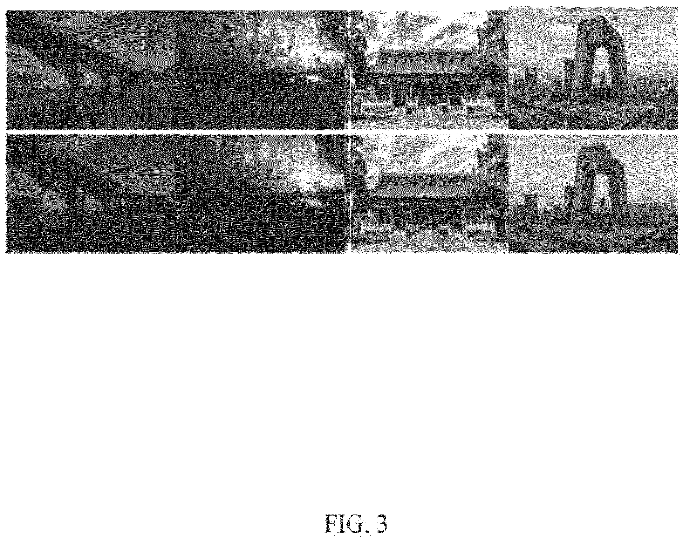

FIG. 3 depicts some examples of sample images and data augmentations provided using HDR, in accordance with some embodiments. The bottom row shows sample images and the top row shows the HDR images, each of which is "virtually" generated from the single image below

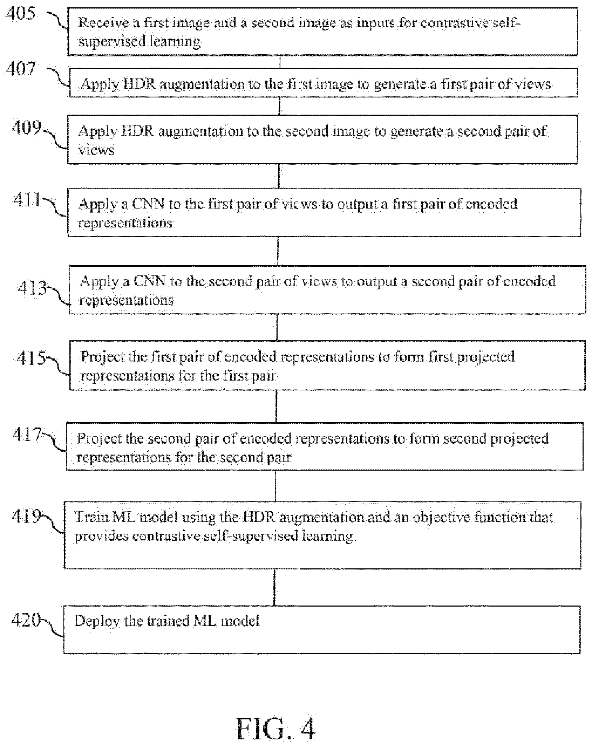

FIG. 4 depicts an example of a process 400 for HDR-based augmentation for contrastive self-supervised learning, in accordance with some embodiments.

At 405, a first image and a second image are received as inputs for contrastive self-supervised learning. For example, a batch of images may be received for unsupervised learning and, in particular, contrastive SSL. As noted, the images may not be annotated or labeled, so one or more of the batch of images may be selected for processing as part of contrastive SSL to train the ML model at 200. Referring to FIG. 2, a first image 210A and a second image 230A (which may be selected from the batch of library of unlabeled images) may be received by the ML model 200, which in this example learns via contrastive SSL.

At 407, HDR data augmentation is applied to the first image to generate a first pair of views. For example, the first image 210A may be processed using HDR 202, such that the HDR image 212A and image 212B represent a first pair of similar views. In this example, image 212B may not be augmented with HDR but rather a copy of the first image 210A. The HDR augmentation of the first image 210 may use virtual (or synthetic) HDR image generation. Alternatively, or additionally, the HDR augmentation may use the repeated image capture f stop approach noted above.

At 409, HDR data augmentation is applied to the second image to generate a second pair of views. For example, the second image 230 may be processed using HDR 204, such that the HDR image 232A and image 232B represent a second pair of similar views. In this example, image 232B may not be augmented with HDR but rather a copy of the second image 230A. The HDR augmentation of the second image 230 may use virtual (or synthetic) HDR image generation and/or may use the repeated image capture f stop approach noted above.

In some embodiments, the augmentation phase of the images may select the HDR augmentation from a group of augmentations, such as graying images, rotating images, changing the color of the images, and the like. Moreover, the selection (along with parametrization) may be random, semi-random, or in accordance with a pattern.

At 411, a CNN is applied to the first pair of views to output a first pair of encoded representations. For example, the CNNs 220A-B each receive a corresponding one of the first pair of views 212A-B and output respective encoded representations 222A-B.

At 413, a CNN is applied to the second pair of views to output a second pair of encoded representations. For example, the CNNs 234A-B each receive a corresponding one of the second pair of views 232A-B and output respective encoded representations 238A-B.

At 415, the first pair of encoded representations are projected to form first projected representations. For example, the encoded representation 222A is projected using the MLP 292A to form projected representation (e.g., embedding) 294A, and the encoded representation 222B is projected using the MLP 292B to form projected representation (e.g., embedding) 294B.

At 417, the second pair of encoded representations are projected to form second projected representations. For example, the encoded representation 238A is projected using the MLP 292C to form projected representation 294C, and the encoded representation 238B is projected using the MLP 292D to form projected representation 294D.

At 419, the ML model 200 is trained using the HDR data augmentations and an objective function that provides contrastive self-supervised learning. For example, the objective function (or loss function) may enable the ML model 200 to training using unannotated images augmented using HDR into similar and dissimilar views, such that the projected representations 294A-D may be used to increase the similarity between similar pairs of projected representations 294A-B and decrease the similarity between dissimilar pairs of projected representations (e.g., between 294A and 294C (or 294D). In some implementations, the model is trained on a variety of images (some if which if not all) may be HDR augmented images. Moreover, the HDR may not be applied on both views simultaneously. And for example, different augmentation may be activated for each view (which augmentation is used may be selected randomly).

At 420, the trained ML model(s) may be deployed for an inference phase. For example, when ML model(s) 200 (e.g., CNNs 220A-B, 234A-B, MLPs 292A-D) training is considered complete, the ML models may be deployed (e.g., by storing the parameters of the ML model(s) or by sending the parameters of the MO model(s) to a host performing an inferences at a host device). As noted, training may be considered complete when a threshold level of iterations and/or a threshold error (or accuracy) measurement of the ML models is reached. Moreover, the trained machine learning model to perform an image classification task during an inference phase of the machine learning model, such as detect objects in images.

Moreover, the first image and the second image may each be selected from an image library of unlabeled images. Furthermore, the first image and the second images may be dissimilar images that depict different content, such as in the case of the pagoda and bridge example noted above. The high dynamic range augmentation (which is used to generate the first pair of views) may take the form of a synthetic high dynamic range generation of the first pair of views and/or a synthetic high dynamic range generation of the second pair of views. In addition, the high dynamic range augmentation may be selected from a group of augmentations available for use to augment the first image and the second image. When this is the case, the selection of the high dynamic range augmentation may trigger or initiate the process of FIG. 4. Further, the first encoder may project the first pair of encoded representations to form the first projected representations, and the second encoder projects the second pair of encoded representations to form the second projected representations. And, a first neural network comprising a first multi-layer perceptron projects the first pair of encoded representations to form the first projected representations, while a second neural network comprising a second multi-layer perceptron projects the second pair of encoded representations to form the second projected representations. The trained machine learning model may be deployed to perform an image classification task (e.g., detect objects in images) during an inference phase of the machine learning model.

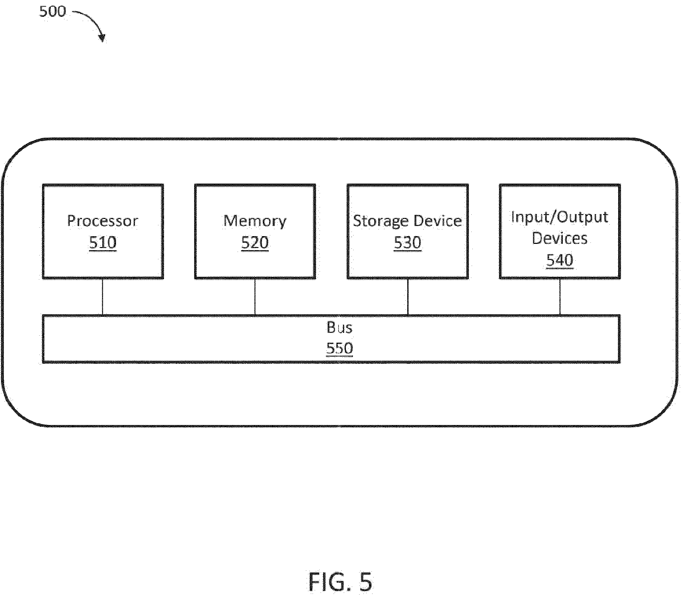

FIG. 5 depicts a block diagram illustrating a computing system 500 consistent with implementations of the current subject matter. For example, the system 500 can be used to implement each of the parties such as 104A-C, the decryptor 102, and/or the aggregator 110.

As shown in FIG. 5, the computing system 500 can include a processor 510, a memory 520, a storage device 530, and input/output devices 540. According to implementations of the current subject matter, a trusted execution environment may be a secure area that may be contained in the processor 510, or it may be an additional hardware and/or software component. The trusted execution environment may run enclaves to guarantee confidentiality and integrity protection to code and data contained therein, even in an untrusted environment.

The processor 510, the memory 520, the storage device 530, and the input/output devices 540 can be interconnected via a system bus 550. The processor 510 is capable of processing instructions for execution within the computing system 500. Such executed instructions can implement one or more components of, for example, the trusted server, client devices (parties), and/or the like. In some implementations of the current subject matter, the processor 510 can be a single-threaded processor. Alternately, the processor 510 can be a multi-threaded processor. The process may be a multi-core processor have a plurality or processors or a single core processor. The processor 510 is capable of processing instructions stored in the memory 520 and/or on the storage device 530 to display graphical information for a user interface provided via the input/output device 540.

The memory 520 is a computer readable medium such as volatile or non-volatile that stores information within the computing system 500. The memory 520 can store data structures representing configuration object databases, for example. The storage device 530 is capable of providing persistent storage for the computing system 500. The storage device 530 can be a floppy disk device, a hard disk device, an optical disk device, or a tape device, or other suitable persistent storage means. The input/output device 540 provides input/output operations for the computing system 500. In some implementations of the current subject matter, the input/output device 540 includes a keyboard and/or pointing device. In various implementations, the input/output device 540 includes a display unit for displaying graphical user interfaces.

According to some implementations of the current subject matter, the input/output device 540 can provide input/output operations for a network device. For example, the input/output device 540 can include Ethernet ports or other networking ports to communicate with one or more wired and/or wireless networks (e.g., a local area network (LAN), a wide area network (WAN), the Internet).

In some implementations of the current subject matter, the computing system 500 can be used to execute various interactive computer software applications that can be used for organization, analysis and/or storage of data in various (e.g., tabular) format (e.g., Microsoft Excel^{®}, and/or any other type of software). Alternatively, the computing system 500 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities (e.g., SAP Integrated Business Planning add-in for Microsoft Excel as part of the SAP Business Suite, as provided by SAP SE, Walldorf, Germany) or can be standalone computing products and/or functionalities. Upon activation within the applications, the functionalities can be used to generate the user interface provided via the input/output device 540. The user interface can be generated and presented to a user by the computing system 500 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. For example, the logic flows may include different and/or additional operations than shown without departing from the scope of the present disclosure. One or more operations of the logic flows may be repeated and/or omitted without departing from the scope of the present disclosure. Other implementations may be within the scope of the following claims.

## Claims

1. A computer-implemented method comprising:
receiving a first image (210A) and a second image (230A) as inputs for contrastive self-supervised learning;
applying a high dynamic range augmentation (202) to the first image (210A) to generate a first pair of views (212A, 212B);
applying the high dynamic range augmentation (204) to the second image (230A) to generate a second pair of views (232A, 232B);
applying a first convolutional neural network (220A, 220B) to the first pair of views (212A, 212B) to output a first pair of encoded representations (222A, 222B);
applying a second convolutional neural network (234A, 234B) to the second pair of views (232A, 232B) to output a second pair of encoded representations (238A, 238B);
projecting the first pair of encoded representations (222A, 222B) to form first projected representations (294A, 294B);
projecting the second pair of encoded representations (238A, 238B) to form second projected representations (294C, 294D); and
training a machine learning model (200) using the high dynamic range augmentations (202, 204) and an objective function that provides contrastive self-supervised learning.

2. The method of claim 1, wherein the first image (210A) and the second image (230A) are each selected from an image library of unlabeled images.

3. The method of claim 1 or 2, wherein the first image (210A) and the second images (230A) are dissimilar images that depict different content.

4. The method of any one of the preceding claims, wherein the high dynamic range augmentation (202) used to generate the first pair of views (212A, 212B) comprises a synthetic high dynamic range generation of the first pair of views (212A, 212B), and wherein the high dynamic range augmentation (204) used to generate the second pair of views (232A, 232B) comprises the synthetic high dynamic range generation of the second pair of views (232A, 232B).

5. The method of claim 4, further comprising:
selecting, high dynamic range augmentation (202, 204), from a group of augmentations available for use to augment the first image (210A) and the second image (230A).

6. The method of any one of the preceding claims, wherein a first encoder projects the first pair of encoded representations (222A, 222B) to form the first projected representations (294A, 294B).

7. The method of any one of the preceding claims, wherein a second encoder projects the second pair of encoded representations (238A, 238B) to form the second projected representations (294C, 294D).

8. The method of any one of the preceding claims, wherein a first neural network (292A, 292B) comprising a first multi-layer perceptron projects the first pair of encoded representations (222A, 222B) to form the first projected representations (294A, 294B).

9. The method of any one of the preceding claims, wherein a second neural network (292C, 292D) comprising a second multi-layer perceptron projects the second pair of encoded representations (238A, 238B) to form the second projected representations (294C, 294D).

10. The method of any one of the preceding claims, further comprising:
deploying the trained machine learning model (200) to perform an image classification task during an inference phase of the machine learning model (200).

11. A system (500), comprising:
at least one data processor (510); and
at least one memory (520) storing instructions which, when executed by the at least one data processor (510), result in operations according to a method of any one of the preceding claims.

12. A non-transitory computer-readable storage medium (530) including instructions which, when executed by at least one data processor (510), result in operations according to a method of any one of claims 1 to 10.

## Patentansprüche

1. Computerimplementiertes Verfahren, umfassend:
Empfangen eines ersten Bilds (210A) und eines zweiten Bilds (230A) als Eingaben für kontrastives selbstüberwachtes Lernen;
Anwenden einer Erweiterung mit hohem Dynamikbereich (202) auf das erste Bild (210A), um ein erstes Paar Ansichten (212A, 212B) zu erzeugen;
Anwenden der Erweiterung mit hohem Dynamikbereich (204) auf das zweite Bild (230A), um ein zweites Paar Ansichten (232A, 232B) zu erzeugen;
Anwenden eines ersten konvolutionellen neuronalen Netzwerks (220A, 220B) auf das erste Paar Ansichten (212A, 212B), um ein erstes Paar kodierter Darstellungen (222A, 222B) auszugeben;
Anwenden eines zweiten konvolutionellen neuronalen Netzwerks (234A, 234B) auf das zweite Paar Ansichten (232A, 232B), um ein zweites Paar kodierter Darstellungen (238A, 238B) auszugeben;
Projizieren des ersten Paars kodierter Darstellungen (222A, 222B), um erste projizierte Darstellungen (294A, 294B) zu bilden;
Projizieren des zweiten Paars kodierter Darstellungen (238A, 238B), um zweite projizierte Darstellungen (294C, 294D) zu bilden; und
Trainieren eines maschinellen Lernmodells (200) unter Verwendung der Erweiterungen mit hohem Dynamikbereich (202, 204) und einer Zielfunktion, die kontrastives selbstüberwachtes Lernen bereitstellt.

2. Verfahren nach Anspruch 1, wobei das erste Bild (210A) und das zweite Bild (230A) jeweils aus einer Bildbibliothek mit ungelabelten Bildern ausgewählt werden.

3. Verfahren nach Anspruch 1 oder 2, wobei das erste Bild (210A) und das zweite Bild (230A) unterschiedliche Bilder sind, die unterschiedlichen Inhalt abbilden.

4. Verfahren nach einem der vorhergehenden Ansprüche, wobei die Erweiterung mit hohem Dynamikbereich (202), die verwendet wird, um das erste Paar Ansichten (212A, 212B) zu erzeugen, eine synthetische Erzeugung eines hohen Dynamikbereichs des ersten Paars Ansichten (212A, 212B) umfasst und wobei die Erweiterung mit hohem Dynamikbereich (204), die verwendet wird, um das zweite Paar Ansichten (232A, 232B) zu erzeugen, die synthetische Erzeugung eines hohen Dynamikbereichs des zweiten Paars Ansichten (232A, 232B) umfasst.

5. Verfahren nach Anspruch 4, ferner umfassend:
Auswählen einer Erweiterung mit hohem Dynamikbereich (202, 204) aus einer Gruppe von Erweiterungen, die zur Verwendung zum Erweitern des ersten Bilds (210A) und des zweiten Bilds (230A) zur Verfügung stehen.

6. Verfahren nach einem der vorhergehenden Ansprüche, wobei ein erster Kodierer das erste Paar kodierter Darstellungen (222A, 222B) projiziert, um die ersten projizierten Darstellungen (294A, 294B) zu bilden.

7. Verfahren nach einem der vorhergehenden Ansprüche, wobei ein zweiter Kodierer das zweite Paar kodierter Darstellungen (238A, 238B) projiziert, um die zweiten projizierten Darstellungen (294C, 294D) zu bilden.

8. Verfahren nach einem der vorhergehenden Ansprüche, wobei ein erstes neuronales Netzwerk (292A, 292B), das ein erstes mehrschichtiges Perzeptron umfasst, das erste Paar kodierter Darstellungen (222A, 222B) projiziert, um die ersten projizierten Darstellungen (294A, 294B) zu bilden.

9. Verfahren nach einem der vorhergehenden Ansprüche, wobei ein zweites neuronales Netzwerk (292C, 292D), das ein zweites mehrschichtiges Perzeptron umfasst, das zweite Paar kodierter Darstellungen (238A, 238B) projiziert, um die zweiten projizierten Darstellungen (294C, 294D) zu bilden.

10. Verfahren nach einem der vorhergehenden Ansprüche, ferner umfassend:
Einsetzen des trainierten maschinellen Lernmodells (200) zur Durchführung einer Bildklassifizierungsaufgabe während einer Inferenzphase des maschinellen Lernmodells (200).

11. System (500), umfassend:
mindestens einen Datenprozessor (510); und
mindestens einen Speicher (520), der Anweisungen speichert, die bei Ausführung durch den mindestens einen Datenprozessor (510) zu Operationen gemäß einem Verfahren nach einem der vorhergehenden Ansprüche führen.

12. Nichtflüchtiges computerlesbares Speichermedium (530), das Anweisungen beinhaltet, die bei Ausführung durch mindestens einen Datenprozessor (510) zu Operationen gemäß einem Verfahren nach einem der Ansprüche 1 bis 10 führen.

## Revendications

1. Procédé mis en œuvre par ordinateur comprenant :
la réception d'une première image (210A) et d'une seconde image (230A) en tant qu'entrées pour l'apprentissage auto-supervisé contrastif ;
l'application d'une augmentation à grande gamme dynamique (202) à la première image (210A) pour générer une première paire de vues (212A, 212B) ;
l'application de l'augmentation à grande gamme dynamique (204) à la seconde image (230A) pour générer une seconde paire de vues (232A, 232B) ;
l'application d'un premier réseau de neurones convolutif (220A, 220B) à la première paire de vues (212A, 212B) pour produire une première paire de représentations encodées (222A, 222B) ;
l'application d'un second réseau de neurones convolutif (234A, 234B) à la seconde paire de vues (232A, 232B) pour produire une seconde paire de représentations encodées (238A, 238B) ;
la projection de la première paire de représentations encodées (222A, 222B) pour former des premières représentations projetées (294A, 294B) ;
la projection de la seconde paire de représentations encodées (238A, 238B) pour former des secondes représentations projetées (294C, 294D) ; et
l'entraînement d'un modèle d'apprentissage automatique (200) utilisant les augmentations à grande gamme dynamique (202, 204) et une fonction d'objectif assurant l'apprentissage auto-supervisé contrastif.

2. Procédé selon la revendication 1, dans lequel la première image (210A) et la seconde image (230A) sont chacune sélectionnées à partir d'une bibliothèque d'images non étiquetées.

3. Procédé selon les revendications 1 ou 2, dans lequel la première image (210A) et la seconde image (230A) sont des images dissemblables représentant différents contenus.

4. Procédé selon l'une quelconque des revendications précédentes, dans lequel l'augmentation à grande gamme dynamique (202) utilisée pour générer la première paire de vues (212A, 212B) comprend une génération synthétique de grande gamme dynamique de la première paire de vues (212A, 212B) et dans lequel l'augmentation à grande gamme dynamique (204) utilisée pour générer la seconde paire de vues (232A, 232B) comprend la génération synthétique de grande gamme dynamique de la seconde paire de vues (232A, 232B).

5. Procédé selon la revendication 4, comprenant en outre :
la sélection d'une augmentation à grande gamme dynamique (202, 204) parmi un groupe d'augmentations disponibles pour augmenter la première image (210A) et la seconde image (230A).

6. Procédé selon l'une quelconque des revendications précédentes, dans lequel un premier encodeur projette la première paire de représentations encodées (222A, 222B) pour former les premières représentations projetées (294A, 294B).

7. Procédé selon l'une quelconque des revendications précédentes, dans lequel un second encodeur projette la seconde paire de représentations encodées (238A, 238B) pour former les secondes représentations projetées (294C, 294D).

8. Procédé selon l'une quelconque des revendications précédentes, dans lequel un premier réseau de neurones (292A, 292B) comprenant un premier perceptron multicouche projette la première paire de représentations encodées (222A, 222B) pour former les premières représentations projetées (294A, 294B).

9. Procédé selon l'une quelconque des revendications précédentes, dans lequel un second réseau de neurones (292C, 292D) comprenant un second perceptron multicouche projette la seconde paire de représentations encodées (238A, 238B) pour former les secondes représentations projetées (294C, 294D).

10. Procédé selon l'une quelconque des revendications précédentes, comprenant en outre :
le déploiement du modèle d'apprentissage automatique entraîné (200) pour réaliser une tâche de classification d'images pendant une phase d'inférence du modèle d'apprentissage automatique (200).

11. Système (500), comprenant :
au moins un processeur de données (510) ; et
au moins une mémoire (520) stockant des instructions qui, lorsqu'elles sont exécutées par ledit au moins un processeur de données (510), entraînent des opérations selon un procédé de l'une quelconque des revendications précédentes.

12. Support de stockage non transitoire lisible par ordinateur (530) comprenant des instructions qui, lorsqu'elles sont exécutées par au moins un processeur de données (510), entraînent des opérations selon un procédé de l'une quelconque des revendications 1 à 10.
